# EUROPEAN PATENT SPECIFICATION

(11) **EP 2 851 602 B1**
(45) Date of publication and mention of the grant of the patent: **03.02.2016**
(21) Application number: 13185490.3
(22) Date of filing: 23.09.2013
(51) Int. Cl.: F16L 41/08, B67D 7/02, E03B 11/00

(54) **Pressure vessel**
Druckbehälter
Récipient sous pression

(43) Date of publication of application: 25.03.2015
(73) Proprietor: PA.E Machinery Industrial Co., Ltd., 42870 Taichung City (TW)
(72) Inventor: Lai, Ming-Yu, 43643 Taichung City (TW)
(74) Representative: Zinkler, Franz

(56) References cited:
- TW-U- M 250 911
- US-A1- 2002 066 731
- US-A1- 2011 220 660
- US-B2- 8 348 085

## Description

The invention relates to a pressure vessel, more particularly to a pressure vessel including a clamping member that presses two sealing rings against a tubing connector and an inner liner, respectively.

A pressure vessel can be used for storing drinking water and for providing a stable supply of the drinking water. The pressure vessel normally includes an outer shell of a metallic material, and an inner liner of a plastic material, such as polypropylene (PP), attached to an inner surface of the outer shell for preventing the drinking water from being contaminated by the metallic material.

U.S. Patent No. 8,348,085, which corresponds to the preamble of claim 1, discloses a conventional pressure vessel that includes: an outer shell of a metallic material that defines an accommodating space therein; an inner liner of a plastic material that is attached to an inner surface of the outer shell; a flexible diaphragm disposed in the accommodating space; a through-wall connector that has an inner tubular portion and an exposed tubular portion which is welded to and extends outwardly from an exterior of the outer shell; and an anti-leakage assembly that is disposed between the inner liner and a neck section of the through-wall connector. The neck section of the through-wall connector is bent to hold the anti-leakage assembly against an interior of the inner liner. The inner tubular portion of the through-wall connector extends from the exposed tubular portion through the outer shell and the inner liner and into the accommodating space.

Since the inner liner is made from the plastic material, the through-wall connector is required to be welded to the outer shell before insertion of the inner liner into the outer shell so as to prevent softening and deformation of the inner liner due to the heat generated by the welding if the inner liner is inserted into the outer shell before the welding of the through-wall connector to the outer shell. As a consequence, insertion of the inner liner into the outer shell after the welding of the through-wall connector can be severely interfered by the inner tubular portion of the through-wall connector, which results in difficulty in assembling the inner liner with the outer shell and which can cause damage to the inner liner when the inner liner passes over the inner tubular portion of the through-wall connector.

Therefore, the object of the present invention is to provide a pressure vessel that can overcome the aforesaid drawback associated with the prior art.

According to the present invention, there is provided a pressure vessel that comprises an outer shell, an inner liner, a tubing connector, an anti-leakage unit, and a flexible diaphragm.

The outer shell defines an accommodating space therein, and has a top wall and a surrounding wall that extends downwardly from the top wall and that is formed with a side through-hole. The inner liner is disposed in the accommodating space, and has an inner surface that defines an inner space, a top wall that is attached to the top wall of the outer shell, and a surrounding wall that extends downwardly from the top wall of the inner liner, that is attached to the surrounding wall of the outer shell, and that is formed with a liner through-hole which is aligned with the side through-hole along an axis. The tubing connector is disposed outwardly of the inner space, is welded to an exterior of the outer shell, and defines a fluid channel that extends along the axis. The anti-leakage unit has a clamping member and elastic inner and outer sealing rings. The clamping member has a tube body and inner and outer end flanges. The tube body extends along the axis through the side through-hole and the liner through-hole and into the inner space and the fluid channel. The inner and outer end flanges extend outwardly and respectively from two opposite ends of the tube body. The inner end flange and the inner sealing ring are disposed in the inner space, and the outer end flange and the outer sealing ring are disposed outwardly of the inner space. The inner and outer end flanges cooperatively provide a clamping force to press the inner and outer sealing rings against the inner liner and the tubing connector, respectively. The flexible diaphragm is disposed in the accommodating space to partition the accommodating space into two separated spaces.

In drawings which illustrate an embodiment of the invention,
Fig. 1 is a partly sectional view of the preferred embodiment of a pressure vessel according to the present invention;
Fig. 2 is a fragmentary sectional view of the preferred embodiment; and
Figs. 3 and 4 are fragmentary sectional views to illustrate consecutive steps of a method of assembling the pressure vessel.

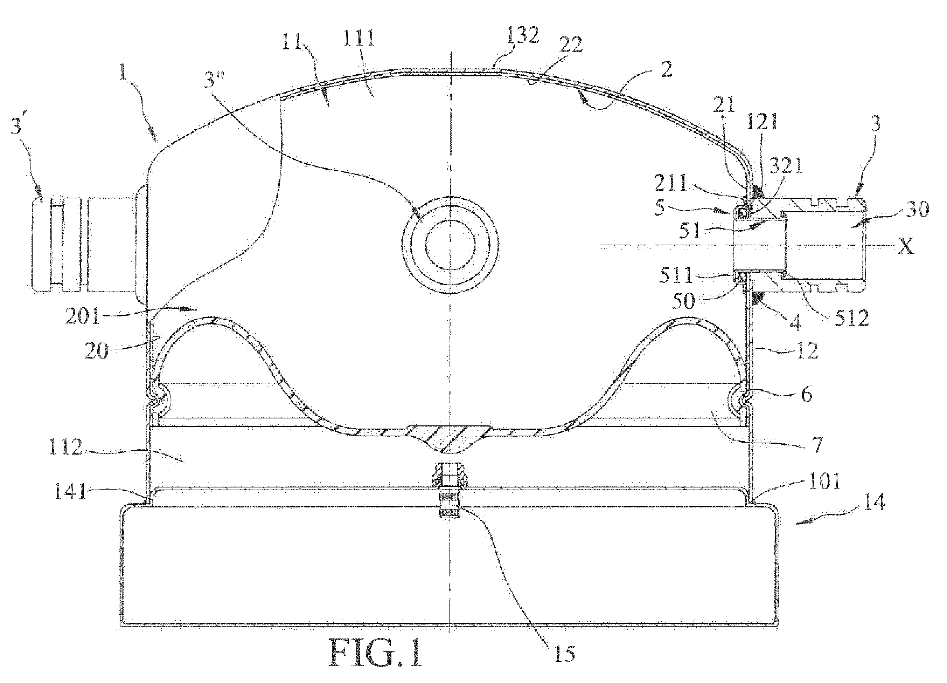

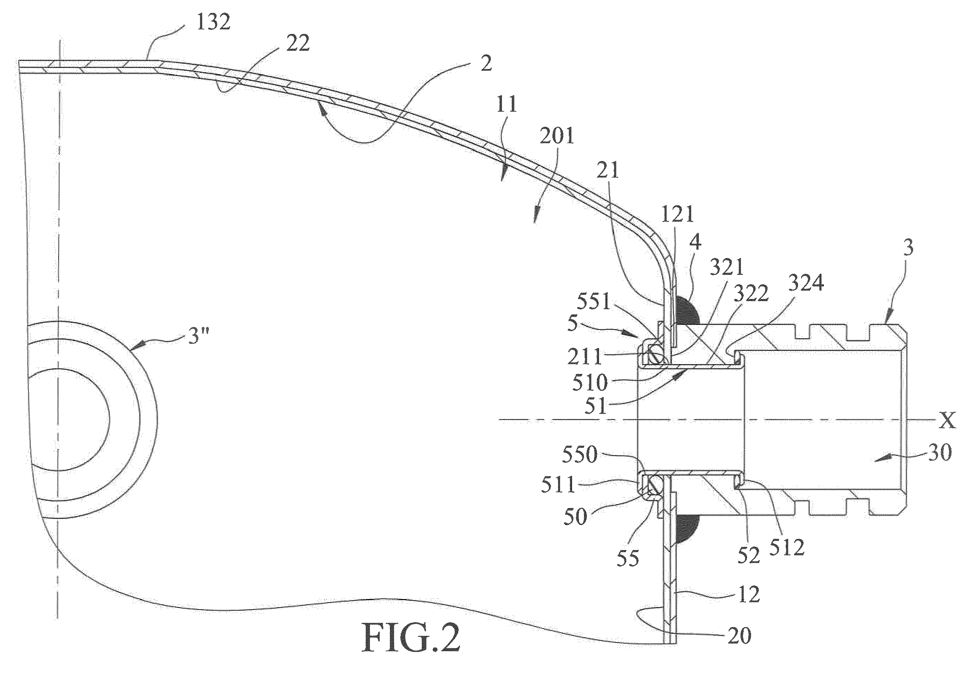

Figs. 1 and 2 illustrate the preferred embodiment of a pressure vessel for a water pumping system according to the present invention. The pressure vessel includes a base 14, a metallic outer shell 1, an inner liner 2 of a plastic material, a first tubing connector 3, a second tubing connector 3', a third tubing connector 3", an anti-leakage unit 5, and a flexible diaphragm 6.

The outer shell 1 defines an accommodating space 11 therein, and has a top wall 132 and a surrounding wall 12 that extends downwardly from the top wall 132 and that is formed with a side through-hole 121. The outer shell 1 further has a bottom opening 101 at a bottom end of the surrounding wall 12. The base 14 is in the form of a hollow stand with an upper end wall 141 that closes the bottom opening 101 of the outer shell 1 and that is welded to the bottom end of the surrounding wall 12 of the outer shell 1. Alternatively, the base 14 can include a stand and a half shell that extends from the stand and that has a structure which is an inverse of the structure of the outer shell 1.

The inner liner 2 is disposed in the accommodating space 11, and has an inner surface 20 that defines an inner space 201, a top wall 22 that is attached to the top wall 132 of the outer shell 1, and a surrounding wall 21 that extends downwardly from the top wall 22 of the inner liner 2, that is attached to the surrounding wall 12 of the outer shell 1, and that is formed with a liner through-hole 211 which is aligned with the side through-hole 121 along an axis (X).

Each of the first, second and third tubing connectors 3, 3', 3" is in the form of a quick release connector that is fixed to the outer shell 1 for connecting the pressure vessel to a pipeline (not shown). The first tubing connector 3 is disposed outwardly of the inner space 201, is welded to an exterior of the outer shell 1, and defines a fluid channel 30 that extends along the axis (X).

The anti-leakage unit 5 includes a clamping member 51, a retainer plate 55, and elastic inner and outer sealing rings 50, 52 that are in the form of an elastic O-ring. The clamping member 51 has a tube body 510 and inner and outer end flanges 511, 512. The tube body 510 extends along the axis (X) through the side through-hole 121 and the liner through-hole 211 and into the inner space 201 and the fluid channel 30. The inner and outer end flanges 511, 512 extend outwardly and respectively from two opposite ends of the tube body 510. The inner end flange 511 and the inner sealing ring 50 are disposed in the inner space 201. The outer end flange 512 and the outer sealing ring 52 are disposed outwardly of the inner space 201. The inner and outer end flanges 511, 512 cooperatively provide a clamping force to press the inner and outer sealing rings 50, 52 against the inner liner 2 and the first tubing connector 3, respectively, so as to provide a sealing effect between the clamping member 51 and the inner liner 2 and a sealing effect between the clamping member 51 and the first tubing connector 3.

The flexible diaphragm 6 is disposed in the accommodating space 11, and is fastened to the inner liner 2 through an annular fastening member 7, so as to partition the accommodating space 11 into an upper space 111 for storing water and a lower space 112 which is separated from the upper space 111 by the diaphragm 6 and which has a bottom side defining the bottom opening 101. The lower space 112 is closed from the bottom side by the upper end wall 141 of the base 14, and is adapted to receive pressurized air therein for applying a pressure to the diaphragm 6.

In this preferred embodiment, the first tubing connector 3 is further disposed outwardly of the accommodating space 11, and has an end face 321 that is disposed in the side through-hole 121 and that abuts against the periphery of the liner through-hole 211. The inner sealing ring 50 abuts against the periphery of the liner through-hole 211.

The first tubing connector 3 is formed with an inner shoulder 324 extending inwardly and radially into the fluid channel 30. The outer end flange 512 is disposed in the fluid channel 30. The outer sealing ring 52 is sandwiched between and abuts against the outer end flange 512 and the inner shoulder 324.

The fluid channel 30 has a diameter-reduced section 322 that extends between the inner shoulder 324 and the end face 321 of the first tubing connector 3 and that has an inner diameter. The liner through-hole 211 has an inner diameter that is substantially equal to the inner diameter of the diameter-reduced section 322 of the fluid channel 30.

The retainer plate 55 is formed with a central opening 550, abuts against the inner surface 20 of the inner liner 2, and cooperates with the periphery of the liner through-hole 211 to define an annular retaining gap 551 therebetween. The inner sealing ring 50 is retained in the retaining gap 551. The tube body 510 extends through the central opening 550. The inner end flange 511 abuts against the retainer plate 55.

A gas valve 15 is mounted to the upper end wall 141 of the base 14, extends into the lower space 112, and is adapted to be connected to an external air supplying source (not shown) for supplying the pressurized air into the lower space 112.

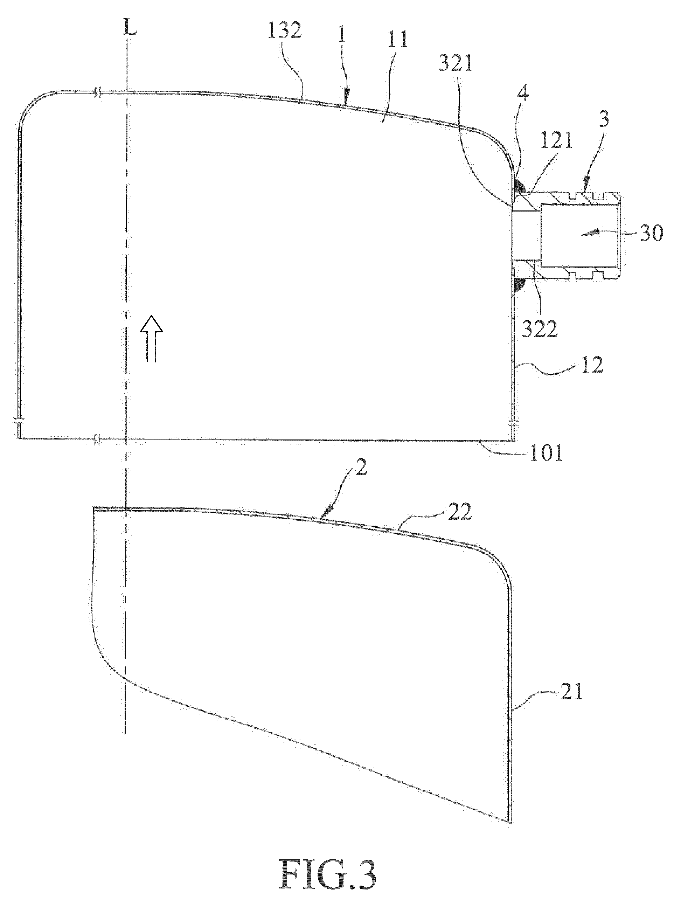

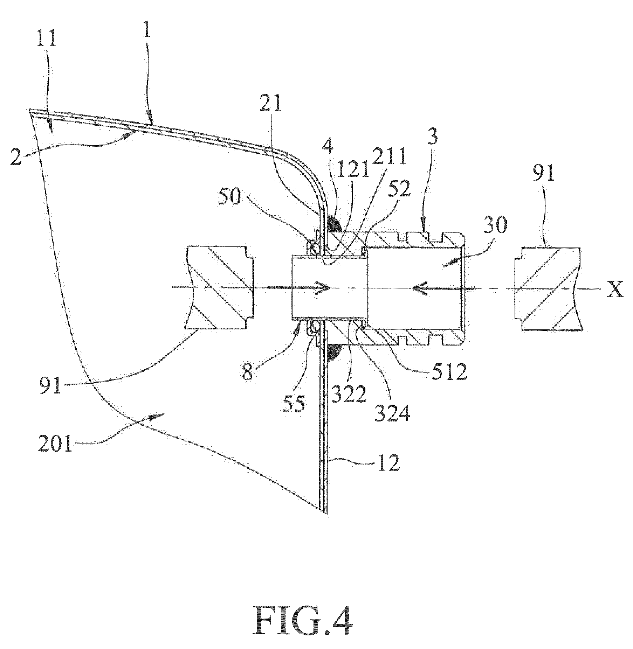

The clamping member 51 is made from a tubular metallic material 8 (see Fig. 4). The tube body 510 and the inner and outer end flanges 511, 512 are formed by deforming the tubular metallic material 8 such that the inner and outer end flanges 511, 512 are respectively bent and extend radially from the opposite ends of the tube body 510. Figs. 3 and 4 illustrate consecutive steps of a method of assembling the pressure vessel. The method includes the steps of: welding the first tubing connector 3 to the exterior of the outer shell 1 such that the end face 321 is disposed within the side through-hole 121 and is flush with an inner surface of the outer shell 1 and that solder 4 is formed and is bonded to the first tubing connector 3 and the exterior of the outer shell 1 (see Fig. 3); inserting the inner liner 2 into the accommodating space 11 along a central axis (L) of the outer shell 1 from the bottom opening 101 of the outer shell 1 (see Fig. 3) and attaching the inner liner 2 to an inner surface of the outer shell 1; forming the liner through-hole 211 in the inner liner 2 using a cutting tool (not shown) that is extended into the diameter-reduced section 322 of the fluid channel 30 and that has a cutting edge, which is spaced apart from the axis (X) by a distance substantially the same as the radius of the diameter-reduced section 322, for cutting the inner liner 2; mounting the outer sealing ring 52 on the tubular metallic material 8 (see Fig. 4) ; inserting the tubular metallic material 8 through the side through-hole 121 and the liner through-hole 211 and into the inner space 201 and the fluid channel 30 (see Fig. 4) ; mounting the retainer plate 55 and the inner sealing ring 50 on the tubular metallic material 8 (see Fig. 4); deforming the two opposite ends of the tubular metallic material 8 using two pressing dies 91 (see Fig. 4), so as to form the tube body 510 and the inner and outer end flanges 511, 512 that are bent from the tube body 510 to press the inner and outer sealing rings 50, 52 against the inner liner 2 and the inner shoulder 324, respectively; mounting the diaphragm 6 in the accommodating space 11 and fixing the diaphragm 6 to the inner liner 2 through the annular fastening member 7 (see Figure 1); and welding the upper end wall 141 of the base 14 to the surrounding wall 12 of the outer shell 1 (not shown). It is noted that formation of the liner through-hole 211 in the inner liner 2 after the insertion of the inner liner 2 into the outer shell 1 is advantageous in that alignment of an axis of the liner through-hole 211 with an axis of the fluid channel 30 during the insertion of the inner liner 2 into the outer shell 1 can be dispensed with.

With the inclusion of the clamping member 51 in the pressure vessel of the present invention, the aforesaid drawback associated with the prior art can be alleviated.

## Claims

1. A pressure vessel comprising
an outer shell (1) defining an accommodating space (11) therein, and having a top wall (132) and a surrounding wall (12) that extends downwardly from said top wall (132) and that is formed with a side through-hole (121);
an inner liner (2) disposed in said accommodating space (11), and having
an inner surface (20) that defines an inner space (201),
a top wall (22) that is attached to said top wall (132) of said outer shell (1), and
a surrounding wall (21) that extends downwardly from said top wall (22) of said inner liner (2), that is attached to said surrounding wall (12) of said outer shell (1), and that is formed with a liner through-hole (211) which is aligned with said side through-hole (121) along an axis (X) ;
a tubing connector (3) disposed outwardly of said inner space (201), welded to an exterior of said outer shell (1), and defining a fluid channel (30) that extends along the axis (X);
**characterised by**
an anti-leakage unit (5) having a clamping member (51) and elastic inner and outer sealing rings (50, 52), said clamping member (51) having a tube body (510) and inner and outer end flanges (511, 512), said tube body (510) extending along the axis (X) through said side through-hole (121) and said liner through-hole (211) and into said inner space (201) and said fluid channel (30), said inner and outer end flanges (511, 512) extending outwardly and respectively from two opposite ends of said tube body (510), said inner end flange (511) and said inner sealing ring (50) being disposed in said inner space (201, said outer end flange (512) and said outer sealing ring (52) being disposed outwardly of said inner space (201), said inner and outer end flanges (511, 512) cooperatively providing a clamping force to press said inner and outer sealing rings (50, 52) against said inner liner (2) and said tubing connector (3), respectively a flexible diaphragm (6) disposed in said accommodating space (11) to partition said accommodating space (11) into two separated spaces ;

2. The pressure vessel of claim 1, **characterized in that** said tubing connector (3) is disposed outwardly of said accommodating space (11), and has an end face (321) that is disposed in said side through-hole (121) and that abuts against the periphery of said liner through-hole (211), said inner sealing ring (50) abutting against the periphery of said liner through-hole (211).

3. The pressure vessel of claim 2, **characterized in that** said tubing connector (3) is formed with an inner shoulder (324), said outer end flange (512) being disposed in said fluid channel (30), said outer sealing ring (52) being sandwiched between and abutting against said outer end flange (512) and said inner shoulder (324).

4. The pressure vessel of claim 3, **characterized in that** said fluid channel (30) has a diameter-reduced section (322) that extends between said inner shoulder (324) and said end face (321) of said tubing connector (3) and that has an inner diameter, said liner through-hole (211) having an inner diameter that is substantially equal to said inner diameter of said diameter-reduced section (322) of said fluid channel (30).

5. The pressure vessel of claim 4, **characterized in that** said anti-leakage unit (5) further has a retainer plate (55) that is formed with a central opening (550), that abuts against said inner surface (20) of said inner liner (2), and that cooperates with the periphery of said liner through-hole (211) to define an annular retaining gap (551) therebetween, said inner sealing ring (50) being retained in said retaining gap (551), said tube body (510) extending through said central opening (550), said inner end flange (511) abutting against said retainer plate (55).

6. The pressure vessel of any one of claims 1 to 5, **characterized in that** said clamping member (51) is made from a tubular metallic material (8), said tube body (510) and said inner and outer end flanges (511, 512) being formed by deforming said tubular metallic material (8) such that said inner and outer end flanges (511, 512) are respectively bent and extend radially from said opposite ends of said tube body (510).

## Patentansprüche

1. Ein Druckbehälter, der folgende Merkmale aufweist:
eine äußere Schale (1), die einen Unterbringungsraum (11) in derselben definiert und eine obere Wand (132) und eine umgebende Wand (12) aufweist, die sich von der oberen Wand (132) nach unten erstreckt und mit einem seitlichen Durchgangsloch (121) gebildet ist;
eine innere Auskleidung (2), die in dem Unterbringungsraum (11) angeordnet ist und folgende Merkmale aufweist:
eine innere Oberfläche (20), die einen inneren Raum (201) definiert,
eine obere Wand (22), die an der oberen Wand (132) der äußeren Schale (1) angebracht ist, und
eine umgebende Wand (21), die sich von der oberen Wand (22) der inneren Auskleidung (2) nach unten erstreckt, die an der umgebenden Wand (12) der äußeren Schale (1) angebracht ist, und die mit einem Auskleidungsdurchgangsloch (211) gebildet ist, das mit dem seitlichen Durchgangsloch (121) entlang einer Achse (X) ausgerichtet ist;
einen Rohrverbinder (3), der außerhalb des inneren Raums (201) angeordnet ist, an ein Äußeres der äußeren Schale (1) geschweißt ist und einen Fluidkanal (30) definiert, der sich entlang der Achse (X) erstreckt;
eine flexible Membran (6), die in dem Unterbringungsraum (11) angeordnet ist, um den Unterbringungsraum (11) in zwei getrennte Räume zu unterteilen;
**gekennzeichnet durch**:
eine Antileckeinheit (5) mit einem Klemmbauteil (51) und einem elastischen inneren und äußeren Dichtring (50, 52), wobei das Klemmbauteil (51) einen Rohrkörper (510) und einen inneren und äußeren Endflansch (511, 512) aufweist, wobei sich der Rohrkörper (510) entlang der Achse (X) **durch** das seitliche Durchgangsloch (121) und das Auskleidungsdurchgangsloch (211) und in den inneren Raum (201) und den Fluidkanal (30) erstreckt, wobei der innere und äußere Endflansch (511, 512) sich von zwei gegenüberliegenden Enden des Rohrkörpers (510) jeweils nach außen erstrecken, wobei der innere Endflansch (511) und der innere Dichtring (50) in dem inneren Raum (201) angeordnet sind, der äußere Endflansch (512) und der äußere Dichtring (52) außerhalb des inneren Raums (201) angeordnet sind, wobei der innere und der äußere Endflansch (511, 512) in Zusammenwirkung eine Klemmkraft bereitstellen, um den inneren und den äußeren Dichtring (50, 52) gegen die innere Auskleidung (2) bzw. den Rohrverbinder (3) zu drücken,

2. Der Druckbehälter gemäß Anspruch 1, der **dadurch gekennzeichnet ist, dass** der Rohrverbinder (3) außerhalb des Unterbringungsraums (11) angeordnet ist und eine Endfläche (321) aufweist, die in dem seitlichen Durchgangsloch (121) angeordnet ist und an den Umfang des Auskleidungsdurchgangslochs (211) angrenzt, wobei der innere Dichtring (50) an den Umfang des Auskleidungsdurchgangslochs (211) angrenzt.

3. Der Druckbehälter gemäß Anspruch 2, der **dadurch gekennzeichnet ist, dass** der Rohrverbinder (3) mit einer inneren Schulter (324) gebildet ist, wobei der äußere Endflansch (512) in dem Fluidkanal (30) angeordnet ist, wobei der äußere Dichtring (52) sandwichartig zwischen dem äußeren Endflansch (512) und der inneren Schulter (324) angeordnet ist und an dieselben angrenzt.

4. Der Druckbehälter gemäß Anspruch 3, der **dadurch gekennzeichnet ist, dass** der Fluidkanal (30) einen Abschnitt (322) mit reduziertem Durchmesser aufweist, der sich zwischen der inneren Schulter (324) und der Endfläche (321) des Rohrverbinders (3) erstreckt und einen Innendurchmesser aufweist, wobei das Auskleidungsdurchgangsloch (211) einen Innendurchmesser aufweist, der im Wesentlichen gleich dem inneren Durchmesser des Abschnitts (322) mit reduziertem Durchmesser des Fluidkanals (30) ist.

5. Der Druckbehälter gemäß Anspruch 4, der **dadurch gekennzeichnet ist, dass** die Antileckeinheit (5) ferner eine Halteplatte (55) aufweist, die mit einer Mittenöffnung (550) gebildet ist, die an die innere Oberflache (20) der inneren Auskleidung (2) angrenzt und die mit dem Umfang des Auskleidungsdurchgangslochs (211) zusammenwirkt, um dazwischen einen ringförmigen Haltezwischenraum (551) zu definieren, wobei der innere Dichtring (50) in dem Haltezwischenraum (551) gehalten wird, wobei sich der Rohrkörper (510) durch die Mittelöffnung (550) hindurch erstreckt, wobei der innere Endflansch (511) an die Halteplatte (55) angrenzt.

6. Der Druckbehälter gemäß einem der Ansprüche 1 bis 5, der **dadurch gekennzeichnet ist, dass** das Klemmbauteil (51) aus einem rohrförmigen Metallmaterial (8) hergestellt ist, wobei der Rohrkörper (510) und der innere und der äußere Endflansch (511, 512) durch Verformen des rohrförmigen Metallmaterials (8) gebildet sind, derart, dass der innere und der äußere Endflansch (511, 512) jeweils gebogen sind und sich von den gegenüberliegenden Enden des Rohrkörpers (510) radial erstrecken.

## Revendications

1. Récipient sous pression, comprenant
une enveloppe extérieure (1) définissant un espace de logement (11) dans celui-ci, et présentant une paroi supérieure (132) et une paroi environnante (12) qui s'étend vers le bas depuis ladite paroi supérieure (132) et qui est formée avec un trou traversant latéral (121);
une doublure intérieure (2) disposée dans ledit espace de logement (11), et présentant
une surface intérieure (20) qui définit un espace intérieur (201), une paroi supérieure (22) qui est fixée à ladite paroi supérieure (132) de ladite enveloppe extérieure (1), et
une paroi environnante (21) qui s'étend vers le bas depuis ladite paroi supérieure (22) de ladite doublure intérieure (2), qui est fixée à ladite paroi environnante (12) de ladite enveloppe extérieure (1), et qui est formée avec un trou traversant de doublure (211) qui est aligné avec ledit trou traversant latéral (121) le long d'un axe (X);
un connecteur de tubage (3) disposé à l'extérieur dudit espace intérieur (201), soudé à l'extérieur de ladite enveloppe extérieure (1), et définissant un canal à fluide (30) qui s'étend le long de l'axe (X);
un diaphragme souple (6) disposé dans ledit espace de logement (11) pour diviser ledit espace de logement (11) en deux espaces séparés;
**caractérisé par**
une unité anti-fuites (5) présentant un élément de serrage (51) et des bagues d'étanchéité intérieure et extérieure élastiques (50, 52), ledit élément de serrage (51) présentant un corps tubulaire (510) et des brides d'extrémité intérieure et extérieure (511, 512), ledit corps tubulaire (510) s'étendant le long de l'axe (X) à travers ledit trou traversant latéral (121) et ledit trou traversant de doublure (211) et dans ledit espace intérieur (201) et ledit canal à fluide (30), lesdites brides d'extrémité intérieure et extérieure (511, 512) s'étendant vers l'extérieur et respectivement à partir de deux extrémités opposées dudit corps tubulaire (510), ladite bride d'extrémité intérieure (511) et ladite bague d'étanchéité intérieure (50) étant disposées dans ledit espace intérieur (201), ladite bride d'extrémité extérieure (512) et ladite bague d'étanchéité extérieure (52) étant disposées à l'extérieur dudit espace intérieur (201), lesdites brides d'extrémité intérieure et extérieure (511, 512) offrant en coopération une force de serrage pour presser lesdites bagues d'étanchéité intérieure et extérieure (50, 52) respectivement contre ladite doublure intérieure (2) et ledit connecteur de tubage (3).

2. Récipient sous pression selon la revendication 1, **caractérisé par le fait que** ledit connecteur de tubage (3) est disposé à l'extérieur dudit espace de logement (11), et présente une face d'extrémité (321) qui est disposée dans ledit trou traversant latéral (121) et qui aboute contre la périphérie dudit trou traversant de doublure (211), ladite bague d'étanchéité intérieure (50) aboutant contre la périphérie dudit trou traversant de doublure (211).

3. Récipient sous pression selon la revendication 2, **caractérisé par le fait que** ledit connecteur de tubage (3) est formé avec un épaulement intérieur (324), ladite bride d'extrémité extérieure (512) étant disposée dans ledit canal à fluide (30), ladite bague d'étanchéité extérieure (52) étant prise en sandwich entre, et aboutant contre, ladite bride d'extrémité extérieure (512) et ledit épaulement intérieur (324).

4. Récipient sous pression selon la revendication 3, **caractérisé par le fait que** ledit canal à fluide (30) présente un segment de diamètre réduit (322) qui s'étend entre ledit épaulement intérieur (324) et ladite face d'extrémité (321) dudit connecteur de tubage (3) et qui présente un diamètre intérieur, ledit trou traversant de doublure (211) présentant un diamètre intérieur qui est sensiblement égal audit diamètre intérieur dudit segment (322) de diamètre réduit dudit canal à fluide (30).

5. Récipient sous pression selon la revendication 4, **caractérisé par le fait que** ladite unité anti-fuites (5) présente par ailleurs une plaque de retenue (55) qui est formée avec une ouverture centrale (550) qui aboute contre ladite surface intérieure (20) de ladite doublure intérieure (2), et qui coopère avec la périphérie dudit trou traversant de doublure (211) pour définir un interstice de retenue annulaire (551) entre elles, ladite bague d'étanchéité intérieure (50) étant retenue dans ledit interstice de retenue (551), ledit corps tubulaire (510) s'étendant à travers ladite ouverture centrale (550), ladite bride d'extrémité intérieure (511) aboutant contre ladite plaque de retenue (55).

6. Récipient sous pression selon l'une quelconque des revendications 1 à 5, **caractérisé par le fait que** ledit élément de serrage (51) est réalisé en un matériau métallique tubulaire (8), ledit corps tubulaire (510) et lesdites brides d'extrémité intérieure et extérieure (511, 512) étant formés par déformation dudit matériau métallique tubulaire (8) de sorte que lesdites brides d'extrémité intérieure et extérieure (511, 512) soient respectivement courbées et s'étendent radialement à partir desdites extrémités opposées dudit corps tubulaire (510).
